# EUROPEAN PATENT SPECIFICATION

(11) **EP 2 279 649 B1**
(45) Date of publication and mention of the grant of the patent: **30.11.2011**
(21) Application number: 08874095.6
(22) Date of filing: 29.10.2008
(51) Int. Cl.: H05B 41/30, H02J 7/34, H02J 9/06, H05B 41/32, G03B 15/05, G03B 7/26

(54) **ARRANGEMENT RELATING POWER BACKUP AND METHOD FOR POWER BACKUP**
ANORDNUNG IN BEZUG AUF POWER BACKUP UND VERFAHREN ZUM POWER BACKUP
MONTAGE RELATIF À UNE ALIMENTATION DE SECOURS ET PROCÉDÉ D'ALIMENTATION DE SECOURS

(30) Priority: 29.04.2008 US 111604
(43) Date of publication of application: 02.02.2011
(73) Proprietor: Sony Ericsson Mobile Communications AB, 221 88 Lund (SE)
(72) Inventor: WILSON, Andreas, 212 22 Malmö (SE)
(74) Representative: Szelagowski, Helen
(86) International application number: PCT/EP2008/064637
(87) International publication number: WO 2009/132715

(56) References cited:
- US-A- 5 053 804
- US-A- 5 291 232
- US-A1- 2005 104 560

## Description

### TECHNICAL FIELD

The present invention relates to a method and arrangement in a device comprising a charging capacitor and using the charging capacitor as a power backup.

### BACKGROUND OF THE INVENTION

Communication devices, such as cellular telephones, have become increasingly versatile. For example, cellular telephones today often include applications that allow users to do more than just make and receive telephone calls, such as send/receive text messages, play music, play video games, take pictures, etc. As a result, cellular telephones have become an increasingly common part of every day life for a large number of users.

The functionality of taking pictures and costumers demands imply that more sufficient camera units are incorporated in the mobile phone. It is not unusual that cameras are of high quality with very good resolution also allowing simple or high quality flash function using an intensive light emitting portion. The flash is usually an ordinary or modified camera flash using a flash capacitor.

Of course, in all electrical devices power supply to the electrical parts is a crucial function. In mobile devices, especially, the device is exposed to motion and shakes which may effect some parts of the device. Usually the battery is connected to the electronics by means of resilient connectors, which may glitch resulting in malfunction of the device.

It is believed that on/off problems, especially du to glitches, are one of the major sources of irritation for the users, which results in high return rate.

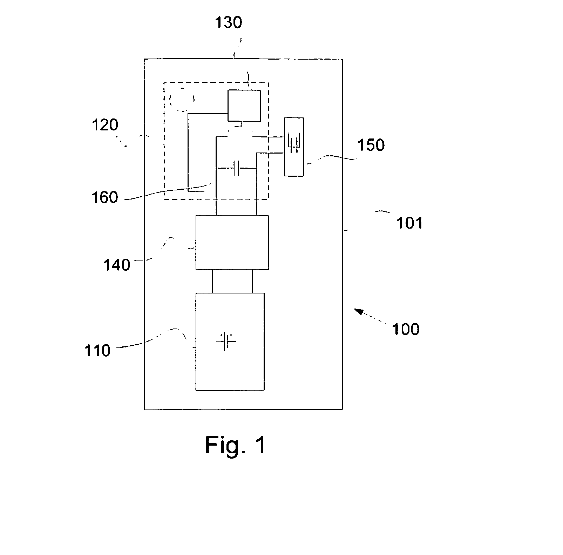

Fig. 1 illustrates a device 100, such as a mobile phone, comprising a housing 101, a power source such as a battery 110, a camera portion 120, controlling electronics 130, voltage transforming circuit 140, a flash 150 and flash capacitor 160.

Of course the device comprises other electrical circuits, e.g. transceiver and interface circuits in case of a mobile phone, well known to a skilled person, which are not described herein.

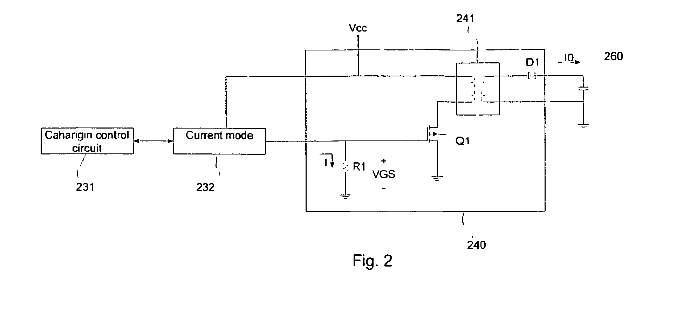

In accordance with prior art, a capacitor charging device for a flash for example disposed in a digital camera is used to charge the flash capacitor of the digital camera so as to provide electricity to the flash. As shown in the example of Fig. 2, the charging device includes a flash capacitor 260, voltage transforming circuit 240, current mode pulse width modulation (PWM) control circuit 231 and charging control circuit 232. The voltage transforming circuit 240 may further include a transformer 241, diode D1, resistor R1 and a transistor (MOSFET) Q1.

When the charging device functions initially, the current mode PWM control circuit 231 outputs a pulse current I to control the gate-to-source voltage VGS. The charging control circuit 232 controls the pulse width of the current I with a time control capacitor (not shown). Since the capacitance of the time control capacitor is small, the soft start period (i.e. the period for reaching the maximum pulse width of the current I) of the current mode PWM control circuit 231 is very short. Hence, the current mode PWM control circuit 231 can output a pulse current I with maximum pulse width in a very short time.

When the pulse current I is "on" (i.e. a state with an output current), the gate-to-source voltage VGS of the MOSFET Q10 is positive and results in an increase of the current ID passing through the MOSFET Q10. While the current ID increases, the transformer 231 generates an induced current I0 to charge the flash capacitor 260. When the pulse current I is "off" (i.e. a state with no output current), the gate-to-source voltage VGS of the MOSFET Q1 is zero and results in the decrease of the current I₀. While the current I₀ decreases, due to the tremendous reverse resistance of the diode D10, the induced current I₀ also reduces to zero. Thereby, the flash capacitor 260 can be charged by the induced current I₀ in the on-off circle of the pulse current I.

Moreover US Patent no. 5,053,804 discloses a device and implicity a method for charging capacitors in which two separate capactitors are used as back up power source and as a power supply for a flash light, respectively.

### SUMMARY OF THE INVENTION

The present invention introduces a novel solution for power backup, which eliminates the problems with on/off due to power failure, e.g. because of power source connection glitches.

Thus, the present invention according to a first aspect of the invention relates to a method in a device comprising electrical components configured to be supplied with power from a power source, the device comprising a capacitive element configured to provide a flash with operational power, the method comprising the steps of: sensing power from the power source, redirecting power from the capacitive element to the electrical components if a power supply failure is detected, and adjusting power level from the capacitive element to a level consumable by the electrical components. Most preferably, the capacitive element is a flash capacitor.

The invention also relates to an arrangement in a device comprising: electrical components configured to be supplied with power, a power source for supplying the components, a capacitive element configured to provide a flash element with operational power. The arrangement comprises: a device for sensing power supplied from the power source, and means for redirecting power from the capacitive element to the electrical components when power from the power source reduces to a predetermined level. Preferably the arrangement may further comprise a power transformer for adjusting power level from the capacitive element to a level consumable by the electrical components. The power supply may be a battery. The capacitive element may be a flash capacitor. The arrangement may further comprise a controller circuit and a switching arrangement. Preferably, the controller circuit receives information about the power supply of the power source to the electrical components. The switching arrangement may be configured to supply power from the power source to parts which need electricity. A power backup controller arrangement may be configured to control a power transforming circuit so that power stored in the capacitive element is transformed down to a level usable by the electrical circuits.

According to another aspect of the invention a device comprising an image recording arrangement and a flash light, a capacitor for powering the flash light and a power source is provided. The device further comprises an arrangement comprising: a device for sensing power supplied from the power source, and means for redirecting power from the capacitive element to the electrical components when a power from the power source reduces to a predetermined level. Most preferably, the device further comprises a communication portion for communication with a communication network. The device may further comprise a housing, a display, control buttons and a keypad. The device may further comprise charging control circuit, a voltage mode circuit, a voltage transforming circuit, a power direction control arrangement and a power directing switch arrangement. In an advantages embodiment for charging the capacitor, when the voltage across the flash capacitor is low, the charging control circuit is arranged to provide a low voltage to activate the voltage mode control circuit, which is arranged to output a voltage, the voltage mode control circuit is arranged to provide a constant current to charge a capacitor of the charging control circuit, whereby the voltage mode control circuit is arranged to increase a pulse width of the pulse voltage according to a voltage across the capacitor, the pulse voltage drives the voltage transforming circuit to provide an induced current to charge the flash capacitor. The power backup controlling arrangement redirects the function of the power transforming circuit so that the power stored in the flash capacitor is transformed down to a suitable level for other electrical circuits in the device.

### BRIEF DESCRIPTION OF THE DRAWINGS

The accompanying drawings, which are incorporated in and constitute a part of this specification, illustrate an embodiment of the invention and, together with the description, explain the invention. In the drawings:
- Fig. 1: illustrates schematically a state of the art solution,
- Fig. 2: illustrates schematically an embodiment according to the present invention,
- Fig. 3: illustrates a device incorporating an arrangement according to the present invention, and
- Fig. 4: illustrates a device incorporating an arrangement according to the present invention in more detail.

### DETAILED DESCRIPTION OF PREFERRED EMBODIMENTS

A "device," as the term is used herein, is to be broadly interpreted to include a radiotelephone; a personal communications system (PCS) terminal that may combine a cellular radiotelephone with data processing, a facsimile, and data communications capabilities; a personal digital assistant (PDA) that can include a radiotelephone, pager, Internet/intranet access, web browser, organizer, calendar, a camera (e.g., video and/or still image camera), a sound recorder (e.g., a microphone), a Doppler receiver, and/or global positioning system (GPS) receiver; a laptop; a GPS device; a camera (e.g., video and/or still image camera); a sound recorder (e.g., a microphone); and any other computation or communication device capable of displaying media, such as a personal computer, a home entertainment system, a television, etc.

A "glitch," as the term is used herein, is to be broadly interpreted to include power supply failure or reduction.

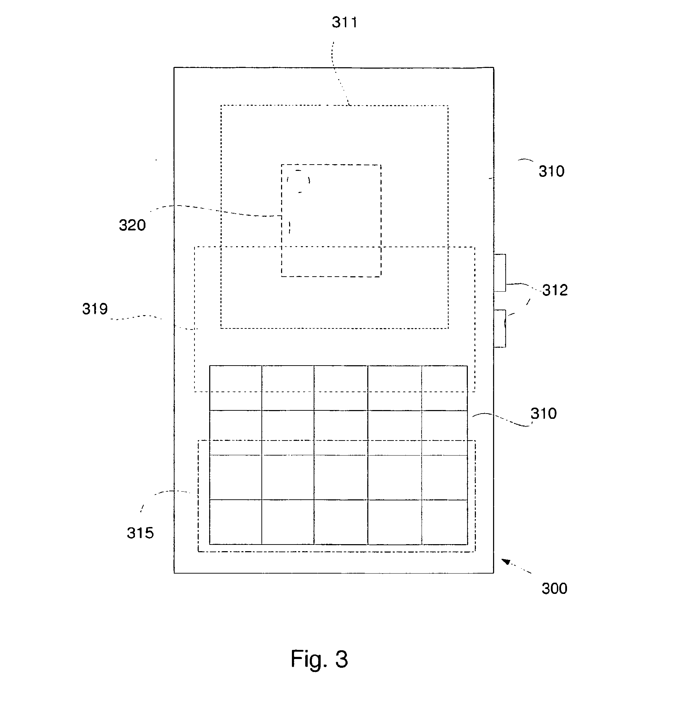

As shown in Fig. 3, an exemplary device 300 may include a housing 310, a display 311, control buttons 312, a keypad 313, communication portion 314, a battery 315 and a camera 320. Housing 310 may protect the components of device 300 from outside elements. Display 311 may provide visual information to the user. For example, display 311 may provide information regarding incoming or outgoing calls, media, games, phone books, the current time, etc. Control buttons 312 may permit the user to interact with device to cause device to perform one or more operations. Keypad 313 may include a standard telephone keypad. Camera 320 may enable a user to capture and store video and/or images (e.g., pictures). The function of the camera portion together with the power backup portion according the present invention will be described in more detail below. The communication portion comprises parts (not shown) such as receiver, transmitter, antenna etc., for establishing and performing communication with one or several communication networks.

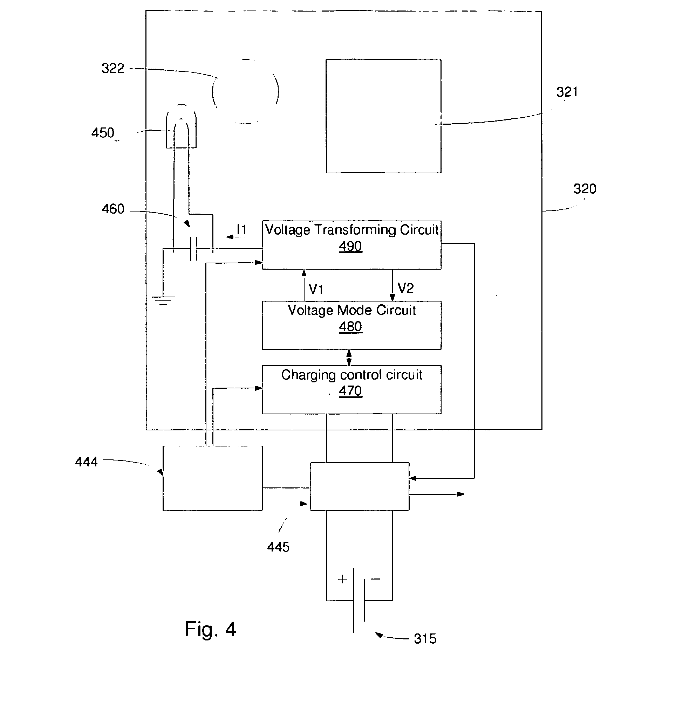

The camera portion 320 in conjunction with the power backup portion according to the present invention, as illustrated in Fig. 4, comprises image capturing electronics 321, camera lens 322, the flash 450, flash capacitor 460, charging control circuit 470, voltage mode circuit 480, voltage transforming circuit 490, power direction control arrangement 444 and power directing switch arrangement 445. It should be noted that Voltage mode circuit is optional according to this example and may be left out or substituted with other voltage controlling arrangement.

The operation of the camera per se is assumed to be well known by a skilled person and not described herein in detail.

Fore charging the capacitor, when the voltage across the flash capacitor 460 is low, the charging control circuit 470 provides a low voltage to activate the voltage mode control circuit 480 and make it output a (pulse) voltage V1. Then, the voltage mode control circuit 480 provides a constant current to charge a capacitor (not shown) of the charging control circuit 470. At the same time, the voltage mode control circuit 480 increases a pulse width of the pulse voltage V1 according to the voltage across the capacitor. The pulse voltage V1 drives the voltage transforming circuit 490 to provide an induced current I1 to charge the flash capacitor 460. When the flash capacitor 460 is charged completely, the voltage transforming circuit 490 provides a high voltage V2 to stop the voltage mode PWM control circuit 480 outputting the pulse voltage V1.

The arrangement of the invention according to this embodiment further comprises a controlling circuit 444 and a switching arrangement 445. The controlling circuit 444 receives information about the power supply of the power source, e.g. battery 315 to the electrical components, such as the transceiver portion, of the device. During normal operation of the device, the switching arrangement 445 is controlled to supply power from the battery to all parts which need electricity. If a power failure, e.g. due to a glitch, is detected, the power backup controlling arrangement 444 redirects the function of the power transforming circuit 490 so that the power stored in the capacitor 460 is transformed down to a suitable level for the electrical circuits in other portions of the device. The switch arrangement is controlled to redirect the down-transformed power from the flash capacitor 460 to the electronics of the device.

By doing so, the effect of the power failure is eliminated and the circuits needing power for their operation are maintained operating.

The invention may detect the power glitches using a low voltage and/or current detector. A detector may be used to detect a power reduction down to a predetermined value.

It should be appreciated that the up/down transformation of the power to and from the capacitor is needed in cases that the capacitor is charged and discharged with higher voltage/current for operating the flash than the rest of the electronics. Thus, in cases the electronics of the devices operate with same voltage current level of the capacitor, the power may be supplied to the electronics without addition down transformation.

Clearly, other capacitive elements can be used in same way as the flash capacitor.

It should be noted that the word "comprising" does not exclude the presence of other elements or steps than those listed and the words "a" or "an" preceding an element do not exclude the presence of a plurality of such elements. It should further be noted that any reference signs do not limit the scope of the claims, that the invention may be implemented at least in part by means of both hardware and software, and that several "means", "units" or "devices" may be represented by the same item of hardware.

The above mentioned and described embodiments are only given as examples and should not be limiting to the present invention. Other solutions, uses, objectives, and functions within the scope of the invention as claimed in the below described patent claims should be apparent for the person skilled in the art.

## Claims

1. A method in a device (300) comprising electrical components configured to be supplied with power from a power source (315), said device comprising a capacitive element (460) configured to provide a flash (450) with operational power, the method being **characterised in that** it comprises the steps of:
• sensing power from said power source (315),
• redirecting power from said capacitive element (460) to said electrical components if a power supply failure is detected.

2. The method of claim 1, further comprising adjusting power level from said capacitive element to a level consumable by said electrical components.

3. The method of claim 1 or 2, wherein said capacitive element is a flash capacitor.

4. An arrangement in a device comprising:
electrical components configured to be supplied with power,
• a power source (315) for supplying said components,
• a capacitive element (460) configured to provide a flash element with operational power,
**characterised in that** said arrangement comprising:
• a device for sensing power supplied from said power source, and
• an arrangement (444) for redirecting power from said capacitive element (460) to said electrical components when power from said power source reduces to a predetermined level.

5. The arrangement of claim 4, further comprising a power transformer for adjusting power level from said capacitive element to a level consumable by said electrical components.

6. The arrangement of claim 4 or 5, wherein said power supply is a battery.

7. The arrangement according to any of claims 4-6, wherein said capacitive element is a flash capacitor.

8. The arrangement according to any of claims 4-6, further comprising a controller circuit 5 and a switching arrangement.

9. The arrangement of claim 8, wherein the controller circuit receives information about the power supply of the power source to said electrical components.

10. The arrangement of claim 8, wherein the switching arrangement is configured to supply power from said power source to parts which need electricity.

11. The arrangement according to any of claims 4-10, comprising a power backup controller arrangement configured to control a power transforming circuit so that power stored in said capacitive element is transformed down to a level usable by said electrical circuits.

12. A device (300) comprising an image recording arrangement (320) and an arrangement according to any of claims 4-11.

13. The device of claim 12, further comprising a communication portion for communication with a communication network.

14. The device of claim 12 or 13, further comprising a housing, a display, control buttons and a keypad.

15. The arrangement according to any of claims 12-14, further comprising charging control circuit, a voltage mode circuit and a voltage transforming circuit.

16. The arrangement according to any of claims 12-15, wherein said means for redirecting power is a power direction control arrangement and a power directing switch arrangement.

17. The device of claim 15, wherein for charging the capacitor, when the voltage across the flash capacitor is low, the charging control circuit is arranged to provide a low voltage to activate the voltage mode control circuit, which is arranged to output a voltage, said voltage mode control circuit is arranged to provide a constant current to charge a capacitor of the charging control circuit, whereby the voltage mode control circuit is arranged to increase a pulse width of the pulse voltage according to a voltage across the capacitor, said pulse voltage drives said voltage transforming circuit to provide an induced current to charge the flash capacitor.

18. The arrangement according to any of claims 12-17, wherein said power backup controlling arrangement redirects the function of the power transforming circuit so that the power stored in said flash capacitor is transformed down to a suitable level for other electrical circuits in said device.

19. The arrangement according to any of claims 12-18, being one of a radiotelephone; a personal communications system (PCS) terminal combining a cellular radiotelephone with data processing, a facsimile, and data communications capabilities; a personal digital assistant (PDA), a camera, a sound recorder, a Doppler receiver, and/or global positioning system (GPS) receiver; a laptop; or a GPS device.

## Patentansprüche

1. Verfahren in einer Vorrichtung (300), die elektrische Komponenten umfasst, die konfiguriert sind, mit Leistung von einer Leistungsquelle (315) versorgt zu werden, wobei die Vorrichtung ein kapazitives Element (460) umfasst, das konfiguriert ist, einem Blitz (450) Betriebsleistung bereitzustellen, wobei das Verfahren **dadurch gekennzeichnet** ist, das es die Schritte umfasst:
- ein Messen von Leistung aus der Leistungsquelle (315),
- ein Umleiten von Leistung aus dem kapazitiven Element (460) zu den elektrischen Komponenten, falls eine Leistungsversorgungsstörung erfasst wird.

2. Verfahren nach Anspruch 1, ferner umfassend ein Anpassen eines Leistungspegels aus dem kapazitiven Element an einen Pegel, welcher von den elektrischen Komponenten verbraucht werden kann.

3. Verfahren nach Anspruch 1 oder 2, wobei das kapazitive Element ein Blitzkondensator ist.

4. Anordnung in einer Vorrichtung, umfassend:
- elektrische Komponenten, die konfiguriert sind, mit Leistung versorgt zu werden,
- eine Leistungsquelle (315), um die Komponenten zu versorgen,
- ein kapazitives Element (460), das konfiguriert ist, einem Blitzelement Betriebsleistung bereitzustellen,
**dadurch gekennzeichnet, dass** die Anordnung umfasst:
- eine Vorrichtung zum Messen von Leistung, die von der Leistungsquelle zugeführt wird, und
- eine Anordnung (444) zum Umleiten von Leistung aus dem kapazitiven Element (460) an die elektrischen Komponenten, wenn eine Leistung von der Leistungsquelle auf einen vorbestimmten Pegel sinkt.

5. Anordnung nach Anspruch 4 ferner umfassend einen Leistungstransformator zum Anpassen eines Leistungspegels aus dem kapazitiven Element an einen Pegel, welcher von den elektrischen Komponenten verbraucht werden kann.

6. Anordnung nach Anspruch 4 oder 5, wobei die Leistungsversorgung eine Batterie ist.

7. Anordnung nach einem der Ansprüche 4 bis 6, wobei das kapazitive Element ein Blitzkondensator ist.

8. Anordnung nach einem der Ansprüche 4 bis 6, ferner umfassend eine Steuerungsschaltung und eine Schaltanordnung.

9. Anordnung nach Anspruch 8, wobei die Steuerungsschaltung Information über die Leistungsversorgung der Leistungsquelle an die elektrischen Komponenten empfängt.

10. Anordnung nach Anspruch 8, wobei die Schaltanordnung konfiguriert ist, Leistung aus der Leistungsquelle Teilen, die Elektrizität benötigen, zuzuführen.

11. Anordnung nach einem der Ansprüche 4 bis 10, umfassend eine Leistungs-Backup-Steuerungs-Anordnung, die konfiguriert ist, eine Leistungstransformationsschaltung zu steuern, so dass Leistung, die in dem kapazitiven Element gespeichert ist, zu einem Pegel heruntertransformiert wird, der von den elektrischen Schaltungen genutzt werden kann.

12. Vorrichtung (300) umfassend eine Bildaufzeichnungsanordnung (320) und eine Anordnung gemäß einem der Ansprüche 4 bis 11.

13. Vorrichtung nach Anspruch 12, ferner umfassend einen Kommunikationsabschnitt zur Kommunikation mit einem Kommunikationsnetzwerk.

14. Vorrichtung nach Anspruch 12 oder 13, ferner umfassend ein Gehäuse, eine Anzeige, Steuerungsknöpfe und ein Tastenfeld.

15. Anordnung nach einem der Ansprüche 12 bis 14, ferner umfassend eine Ladesteuerungsschaltung, eine Spannungsmodusschaltung und eine Spannungstransformationsschaltung.

16. Anordnung nach einem der Ansprüche 12 bis 15, wobei das Mittel zum Umleiten von Leistung eine Leistungsleitsteuerungsanordnung und eine Leistungsleitschaltanordnung ist.

17. Vorrichtung nach Anspruch 15, wobei zum Laden des Kondensators, wenn die Spannung über dem Blitzkondensator niedrig ist, die Ladesteuerungsschaltung eingerichtet ist, eine niedrige Spannung bereitzustellen, um die Spannungsmodussteuerungsschaltung zu aktivieren, die eingerichtet ist, eine Spannung auszugeben, wobei die Spannungsmodussteuerungsschaltung eingerichtet ist, einen konstanten Strom bereitzustellen, um einen Kondensator der Ladesteuerungsschaltung aufzuladen, wodurch die Spannungsmodussteuerungsschaltung eingerichtet ist, eine Pulsweite der Pulsspannung zu vergrößern, gemäß einer Spannung über dem Kondensator, wobei die Pulsspannung die Spannungstransformationsschaltung treibt, um einen induzierten Strom bereitzustellen, um den Blitzkondensator aufzuladen.

18. Anordnung nach einem der Ansprüche 12 bis 17, wobei die Leistungs-Backup-Steuerungs-Anordnung die Funktion der Leistungstransformationsschaltung umschaltet, so dass die Leistung, die in dem Blitzkondensator gespeichert ist, herunter auf einen geeigneten Pegel transformiert wird, für andere elektrische Schaltungen in der Vorrichtung.

19. Anordnung nach einem der Ansprüche 12 bis 18, die eines aus einem Funktelefon; einem persönlichen Kommunikationssystem (PCS) Endgerät, das ein zelluläres Funktelefon mit Datenverarbeitung, einem Fax, und Datenkommunikationsfähigkeiten kombiniert; einem Personal-Digital-Assistant (PDA), einer Kamera, einem Tonaufnahmegerät, einem Dopplerempfänger und/oder einem Global-Positioning-System (GPS) Empfänger, einem Laptop oder einer GPS-Vorrichtung ist.

## Revendications

1. Procédé dans un dispositif (300) comprenant des composants électriques configurés de façon à être alimentés en énergie à partir d'une source d'alimentation (315), ledit dispositif comprenant un élément capacitif (460) configuré de façon à délivrer à un flash (450) une énergie de fonctionnement, le procédé étant **caractérisé en ce qu'**il comprend les étapes consistant à :
. détecter une énergie à partir de ladite source d'alimentation (315),
. rediriger l'énergie dudit élément capacitif (460) auxdits composants électriques si une défaillance d'alimentation est détectée.

2. Procédé selon la revendication 1, comprenant de plus l'ajustement du niveau d'énergie à partir dudit élément capacitif à un niveau pouvant être consommé par lesdits composants électriques.

3. Procédé selon la revendication 1 ou 2, dans lequel ledit élément capacitif est un condensateur de flash.

4. Agencement dans un dispositif, comprenant :
. des composants électriques configurés de façon à être alimentés en énergie,
. une source d'alimentation (315) pour alimenter lesdits composants,
. un élément capacitif (460) configuré de façon à délivrer à un élément de flash une énergie de fonctionnement,
**caractérisé en ce que** ledit agencement comprend .
. un dispositif pour détecter une énergie délivrée à partir de ladite source d'alimentation, et
. un agencement (444) pour rediriger l'énergie dudit élément capacitif (460) auxdits composants électriques lorsque l'alimentation à partir de ladite source d'alimentation se réduit à un niveau prédéterminé.

5. Agencement selon la revendication 4, comprenant de plus un transformateur d'énergie pour ajuster un niveau d'énergie à partir dudit élément capacitif à un niveau pouvant être consommé par lesdits composants électriques.

6. Agencement selon la revendication 4 ou 5, dans lequel ladite alimentation est une pile ou une batterie.

7. Agencement selon l'une quelconque des revendications 4 à 6, dans lequel ledit élément capacitif est un condensateur de flash.

8. Agencement selon l'une quelconque des revendications 4 à 6, comprenant de plus un circuit de dispositif de commande et un agencement de commutation.

9. Agencement selon la revendication 8, dans lequel le circuit de dispositif de commande reçoit une information concernant l'alimentation de la source d'alimentation vers lesdits composants électriques.

10. Agencement selon la revendication 8, dans lequel l'agencement de commutation est configuré de façon à délivrer une alimentation à partir de ladite source d'alimentation à des parties qui nécessitent de l'électricité.

11. Agencement selon l'une quelconque des revendications 4 à 10, comprenant un agencement de dispositif de commande de sauvegarde d'énergie configuré de façon à commander un circuit de transformation d'énergie, de telle sorte que l'énergie stockée dans ledit élément capacitif soit transformée par abaissement à un niveau utilisable par lesdits circuits électriques.

12. Dispositif (300) comprenant un agencement d'enregistrement d'image (320) et un agencement selon l'une quelconque des revendications 4 à 11.

13. Dispositif selon la revendication 12, comprenant de plus une partie de communication pour une communication avec un réseau de communication.

14. Dispositif selon la revendication 12 ou 13, comprenant de plus un boîtier, un dispositif d'affichage, des boutons de commande et un clavier.

15. Agencement selon l'une quelconque des revendications 12 à 14, comprenant de plus un circuit de commande de charge, un circuit de mode de tension et un circuit de transformation de tension.

16. Agencement selon l'une quelconque des revendications 12 à 15, dans lequel lesdits moyens pour rediriger une alimentation sont un agencement de commande de direction d'alimentation et un agencement de commutateur de direction d'alimentation.

17. Dispositif selon la revendication 15, dans lequel, pour charger le condensateur, lorsque la tension aux bornes du condensateur de flash est basse, le circuit de commande de charge est agencé de façon à délivrer une basse tension afin d'activer le circuit de commande de mode de tension, qui est agencé de façon à délivrer en sortie une tension, ledit circuit de commande de mode de tension étant agencé de façon à délivrer un courant constant afin de charger un condensateur du circuit de commande de charge, grâce à quoi le circuit de commande de mode de tension est agencé de façon à accroître une largeur d'impulsion de la tension pulsée en fonction d'une tension aux bornes du condensateur, ladite tension pulsée attaquant ledit circuit de transformation de tension afin de produire un courant induit pour charger le condensateur de flash.

18. Agencement selon l'une quelconque des revendications 12 à 17, dans lequel ledit agencement de commande de sauvegarde d'énergie redirige le fonctionnement du circuit de transformation d'énergie de telle sorte que l'énergie stockée dans ledit condensateur de flash soit transformée par abaissement à un niveau approprié pour d'autres circuits électriques dans ledit dispositif.

19. Agencement selon l'une quelconque des revendications 12 à 18, qui est l'un quelconque parmi un radiotéléphone ; un terminal de système de communications personnel (PCS) combinant un radiotéléphone cellulaire à des capacités de traitement de données, de télécopieur, et de communications de données ; un assistant numérique personnel (PDA), une caméra, un appareil photographique, un enregistreur de sons, un récepteur Doppler, et/ou un récepteur de système de positionnement sur le globe (GPS) ; un ordinateur portable ; ou un dispositif de GPS.
